# NEW EUROPEAN PATENT SPECIFICATION

(11) **EP 0 101 129 B2**
(45) Date of publication and mention of the opposition decision: **02.10.1996**
(45) Mention of the grant of the patent: 12.08.1992
(21) Application number: 83201159.7
(22) Date of filing: 03.08.1983
(51) Int. Cl.: F15B 15/14, F16J 10/02, B62D 33/06

(54) **Fluid lost motion cylinder**
Flüssigkeitszylinder mit freier Bewegung
Cylindre à fluide à mouvement libre

(30) Priority: 04.08.1982 US 405302
(43) Date of publication of application: 22.02.1984
(73) Proprietor: Applied Power Inc., Brookfield Wisconsin 53005 (US)
(72) Inventor: Oudelaar, Tone, Oldenzaal (NL); Fun, Johannes Krijn, Delden (NL)
(74) Representative: Boelsma, Gerben Harm, Ir.

(56) References cited:
- DE-A- 2 030 450
- DE-A- 2 236 311
- DE-A- 2 356 249
- GB-A- 1 447 673
- GB-A- 2 009 883
- GB-A- 2 009 883
- US-A- 3 853 368
- US-A- 3 853 368
- DIN 8585, April 1971

## Description

The invention relates to a hydraulic piston cylinder as defined in the first part of the claim.

Such a piston cylinder device is disclosed in DE-A-20 30 450. Through the groove in the bottom area of the inner wall surface of the cylinder hydraulic fluid is permitted to flow between the cylinder space on one side of the piston and the cylinder space on the other side of the piston when the latter is taking an end position at the respective end of the cylinder. This permits limited relative movement between the piston and cylinder in response to bouncing movement of the cab with respect to the chassis as the truck operates over-the-road.

In the well-known construction above referred to the groove is provided by machining, which necessarily results in a reduced wall thickness and a weakening in the grooved area. With respect to this groove it is said in DE-A-20 30 450 that there is a tendency for the sealing ring to conform to the form of the groove. In other words, the sealing ring tends to fill up thegroove. It is in connection with this tendency that the outer part of the sealing ring is formed of a harder resinous material i.e. harder than the rubber 0-ring which forms the inner part of the sealing ring. Such a two-part sealing ring will have better resistance to peripheral deformation.

The invention aims at providing an improved cylinder of the type above referred to, which is inexpensive to manufacture and in which the forming of said groove does not result in a reduction and inherent weakening of the cylinder wall.

This aim is achieved by the features mentioned in the second part of the claim.

In this connection it should be considered that cold forming of a cylinder to provide fluting is known per se from GB-A-2 009 893, where the grooves (called "ribs") are provided in the outer cylinder of a shock absorber. This in that case the grooves are not formed in the piston guiding inner cylinder and do not fulfil a by-pass function as in a cab tilt device. Moreover GB-A-2 009 893 recommends that the grooves (ribs) do not extend into the end portions of the (outer) cylinder so that the end portions will be of circular cross-section to permit the leak-proof attachment of an end closure at the respective cylinder end, while according to the invention grooves are - to the contrary - exclusively formed at the cylinder end(s).

The invention will be hereinafter further described by way of example with reference to the accompanying drawings.
Figure 1 is a side view, partly in elevation and partly in cross-section, of a preferred embodiment of the invention;
fig 2 is a view along the line 2-2 in fig 1 and
fig 3 is a view along the line 3-3 in Figure 2.

The drawings illustrate a piston and cylinder device having a cylinder 10 and a piston 12 slidably received in the cylinder 10. A fitting 14 conducts working fluid to and from the push chamber 16, and a fitting 18 and an external conduit 20 conduct working fluid to and from the pull chamber 22. An end piece with a conventional mounting bore 24 is attached, by welding, to the "bottom" end of the cylinder 10. A rod 26 is attached to the piston 12, and it is to be understood that another conventional mounting bore (not shown) is provided at the "top" of the rod 26. Packing 28 and a wiping seal 30 are provided at the "top" end of the cylinder 10, with the rod 26 emerging therefrom in conventional fashion.

At least one (in the illustrated embodiment, four) groove 32 is provided in the bottom end area of the inner surface of the cylinder 10. The groove 32 extends axially along the inner surface for a distance greater than the thickness of the piston 12. Thus. the grooves 32 extend beyond the piston 12 in both axial directions over at least a portion of the travel of the piston 12 within the cylinder 10.

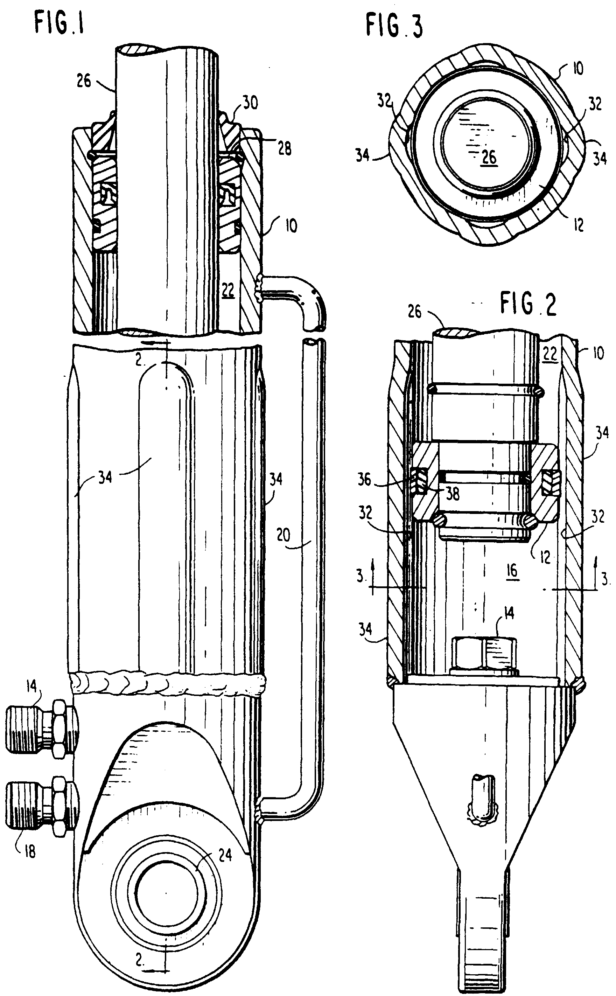

The grooves 32 are obtained by cold forming the wall of the cylinder radially outwardly. Since the wall of the cylinder is of uniform thickness. the cold forming resuits in an external fluting 34 shown in elevation in fig 1 and in cross-section in figs 2 and 3.

Piston 12 accomodates a two-part seal. The outer part 36 is a glass-filled PTFE sleeve, and the inner part 38 is a resilient rubber O-ring which is somewhat compressed by the fit between the outer part 36 and the inner wall of the cylinder 10 between the grooves 32. thereby biasing the outer part 36 outwardly and Into close engagement with the inner wall of the cylinder 10.

## Claims

1. Hydraulic piston cylinder device adapted to be mounted between a vehicle chassis and a vehicle cab and suitable for tilting and supporting said cab relative to said chassis, said device comprising a cylinder (10) having inner and outer wall surfaces and a piston rod (26) carrying at one end a piston (12) which is mounted to slidingly move within said cylinder (10) between an extended and a retracted position, said cylinder (10) having a bottom end which is closed by an end piece, said end piece being provided with a mounting eye (24) and being fastened to said bottom end by welding, while the piston rod (26) extends outwardly through the opposite cylinder end,
at least one groove (32) being provided in the bottom end area of the inner wall surface of the cylinder and extending from said end piece longitudinally through a distance which is larger than the axial size of said piston,
said piston (12) having a circumferential groove accomodating a two-part sealing ring (36, 38) for slidingly contacting said inner wall surface, which comprises an inner O-ring (38) of rubber and a ring (36) of a harder resinous material surrounding said inner ring (38), characterized in that
- said at least one groove (32) being formed by cold forming the bottom end portion of said cylinder wall radially outwardly,
- the cylinder (10) wall has a uniform wall thickness, and
- the outer ring (36) of said two-part ring is formed of glass-filled PTFE.

## Patentansprüche

1. Hydraulische Kolben-Zylindervorrichtung zum Anordnen zwischen einem Fahrzeugrahmen und einem Führerhaus und geeignet zum Kippen und Stützen des Führerhauses mit bezug auf das Fahrzeugrahmen, welche Vorrichtung einen Zylinder (10) mit inneren und äusseren Wandflächen aufweist, sowie eine Kolbenstange (26), mit an einem Ende einem im Zylinder (10) zwischen einer eingeschobenen und einer ausgeschobenen Lage ver-schiebbar montierten Kolben (12), welcher Zylinder (10) ein Bodenende aufweist, welches von einem mit einem Gelenköse versehenen Endstück abgeschlossen ist, welches Endstück durch Schweissen am Bodenende des Zylinders befestigt ist während die Kolbenstange (26) sich durch das gegenüberliegende Zylinderende hindurch nach aussen erstreckt, wobei im Bodenbereich der inneren Wandung des Zylinders wenigstens eine Nut (32) vorgesehen ist, die sich vom genannten Endstück in der Längs-richtung erstreckt um eine Länge, die die achsiale Grösse des Kolbens übersteigt, welcher Kolben (12) eine Umgangsnut aufweist, in der ein zweiteiliger, die innere Wandung gleitend berührender Dichtungsring (36,38) angeordnet ist, der aus einem inneren O-ring (38) aus Gummi und einem den letzteren (38) umgebenden Ring (36) aus einem härteren Kunststoff besteht, dadurch gekennzeichnet, dass die Zylinder (10) eine uniforme Wand-stärke aufweist und dass die genannte wenigsten eine Nut (32) durch eine radial nach aussen gerichtete Kaltverformung des am Zylinderbodem grenzenden Endabschnitt der Zylinderwand hergestellt ist, und der äussere Ring (36) des zweiteiligen Ringes aus einem verstärkten glasverstärkten PTFA geformt ist.

## Revendications

1. Dispositif de cylindre hydraulique à piston apte à être monté entre un châssis de véhicule et une cabine de véhicule et approprié pour basculer et supporter ladite cabine par rapport au châssis, ledit dispositif comprenant un cylindre (10) ayant des surfaces de parois interne et externe et une tige de piston (26) portant à une extrémité un piston (12) qui est monté pour se déplacer de façon coulissante à l'intérieur dudit cylindre (10) entre une position étendue et rétractée, ledit cylindre (10) ayant une extrémité de fond qui est fermée par une pièce d'extrémité, ladite pièce d'extrémité étant pourvue d'un oeil de montage (24) et étant fixée à ladite extrémité de fond par soudage, tandis que la tige de piston (26) s'étend vers l'extérieur à travers l'extrémité de cylindre opposée,
au moins une rainure (32) étant prévue dans la zone d'extrémité de fond de la surface de paroi interne du cylindre et s'étendant à partir de ladite pièce d'extrémité longitudinalement sur une distance qui est plus grande que la taille axiale dudit piston,
ledit piston (12) ayant une rainure circonférentielle logeant un anneau d'étanchéité en deux parties (36, 38) pour contacter de façon coulissante ladite surface de paroi interne, qui comprend un anneau torique interne (38) en caoutchouc et un anneau (36) d'un matériau résineux plus dur entourant ledit anneau interne (38), caractérisé en ce que :
- ladite au moins une rainure (32) étant formée radialement vers l'extérieur par façonnage à froid de la partie d'extrémité de fond de ladite paroi de cylindre,
- la paroi de cylindre (10) a une épaisseur de paroi uniforme, et
- l'anneau externe (36) dudit anneau en deux parties est formé en PTFE rempli de verre.
